# EUROPÄISCHE PATENTSCHRIFT

(11) **EP 3 363 980 B1**
(45) Veröffentlichungstag und Bekanntmachung des Hinweises auf die Patenterteilung: **29.01.2020**
(21) Anmeldenummer: 18000123.2
(22) Anmeldetag: 11.02.2018
(51) Int. Cl.: G06M 1/274, G06M 3/02, E06B 3/36, G06M 1/27

(54) **SCHWENKTÜR**
SWING DOOR
PORTE PIVOTANTE

(30) Priorität: 16.02.2017 AT 562017
(43) Veröffentlichungstag der Anmeldung: 22.08.2018
(73) Patentinhaber: Degelsegger, Walter, 4693 Desselbrunn (AT)
(72) Erfinder: Degelsegger, Walter, 4693 Desselbrunn (AT)

(56) Entgegenhaltungen:
- DE-A1-102010 043 407
- JP-A- H0 860 957

## Beschreibung

Die Erfindung betrifft eine von Hand aus zu öffnende Schwenktür.

Die Schriften JP 8060957 A, JP 8060958 A, JP 10238258 A, DE 19917831 A1, GB 2342389 A, US 2002153854 A1, US 7493726 B2, JP 2003090169 A und DE 102010043407 A1 befassen sich mit Rolltoren oder Sektionaltoren, bei denen das bewegliche flächige Verschlusselement in vertikaler Richtung bewegbar ist, wobei die Bewegung dieses Verschlusselementes zumindest in eine Richtung durch einen Elektromotor antreibbar ist. Die elektronische Steuerung, welche den Elektromotor steuert, umfasst dabei auch eine Zählschaltung, welche Öffnungs-Schließzyklen des Tores mitzählt und bei Erreichen einer vorgegebenen Anzahl von Zyklen ein Hinweis auf eine notwendige Wartung generiert. Die Notwendigkeit des Hinweises auf die Wartung wird damit begründet, dass von derartigen automatisch angetriebenen Toren erhebliche Verletzungsgefahren für Personen ausgehen können, wenn die Tore schlecht gewartet sind.

Die US 5006697 A und die US 8004393 B2 beschreiben ein auf- und ab rollbares Rolltor für den Laderaum eines Lastkraftfahrzeuges, welches im Schlossbereich mit einem nicht rückstellbaren Zählwerk ausgestattet ist, welches Öffnungs-Schließzyklen des Rolltores mitzählt. Das Zählwerk dient als langfristig kostengünstiger Ersatz für eine Versiegelung, welche bestimmungsgemäß dazu dient, unbefugtes Öffnen des Frachtraums erkennbar zu machen.

Die zum Teil schon sehr alten Schriften DE 347875 C, CH 310474 A, DE 1077561 B, DE 1045843 B, DE 1055997 B, DE 19625186 A1, DE 29611064 U1 und JP 2008231814 A beschreiben Schlösser für Schwenktüren, bei denen mitgezählt wird, wie oft der Türflügel von der verriegelten in die entriegelte Stellung gebracht wird. Zweck ist dabei vorwiegend, Informationen darüber zu erhalten, wie häufig der durch die Schwenktür versperrte Raum betreten wird - beispielsweise um die Benutzungshäufigkeit einer öffentlichen Toilette zu erfassen.

Die DE 20200600973 U1 zeigt eine Vorrichtung, welche an einer Schwenktür anordenbar ist und dazu dient, mechanische Energie aus Bewegung des schwenkbaren Flügels gegenüber der Zarge in elektrische Energie umzuwandeln. Es ist nicht angedacht, die Energieerzeugungseinrichtung für das Zählen von Öffnungs-Schließzyklen des Flügels zu verwenden.

Die JP 2008059130 A betrifft eine Alarmanlage welche das Betreten eines Raumes durch eine Tür überwacht und (nur) vom Inneren des Raumes her ein- bzw. ausgeschaltet werden kann. Um zu ermöglichen, dass eine Person die sich im Inneren des Raumes befindet die Alarmanlage einschaltet, dann den Raum durch die Tür verlassen kann, später den Raum durch die Tür wieder betreten kann, und die Alarmanlage nach dem Betreten des Raumes vor einem Alarm wieder ausschalten kann, werden die Öffnungsvorgänge der Tür mitgezählt, wobei nur bis maximal drei gezählt wird. Bei Zählwert 1 geschieht nichts; bei Zählwert 2 kommt es nur dann zum Alarm, wenn nicht innerhalb einer zumutbaren Zeit nach dem Erreichen des Zählwertes 2 die Anlage abgeschaltet wird; bei Zählwert drei kommt es sofort zum Alarm.

Für Beschläge von Schwenktüren sind Normen, Prüfverfahren, Montage- und Wartungsanleitungen, Gebrauchsklassen und Wartungsintervalle in Abhängigkeit von Betätigungszyklen festgelegt. Beispielsweise kann durch die jeweiligen Hersteller für das Schloss eine Wartung nach 50.000 Zyklen vorgeschrieben sein, für den Drücker nach 100.000 Zyklen und für die Türbänder nach 30.000 Zyklen. An einer händisch betätigten Tür ist die Zyklenanzahl, die die Tür hinter sich hat aber nicht erkennbar. Das kann zu schlecht gewarteten Komponenten und zu rechtlichen Problemen bei Haftungsfällen führen.

Die in einem Gebäude eingebauten Türen werden in unterschiedlichen Weisen und vor allem unterschiedlich häufig genutzt. Sollten alle Türen des Gebäudes jährlich einmal gewartet werden, sind Türen die nur hundertmal betätigt wurden gleich betroffen wie Türen die tausendmal öfter betätigt werden. Das führt sowohl zu unnötigen Wartungen an wenig betätigten Türen, als auch zu Türen die schadhaft sind weil sie zu wenig gewartet werden.

Die Probleme sind bei sicherheitsrelevanten Funktionstüren wie insbesondere Notausgangs-, Panik- und Feuerschutztüren, welche als von Hand aus zu öffnende Schwenktüren ausgebildet sind, besonders relevant, weil die verlässliche störungsfreie Funktion der Komponenten für Menschen sicherheitsrelevant ist. Um Gefährdung zu vermeiden muss entweder extrem oft - und damit auch oft unnötig - gewartet werden, oder die die Komponenten müssen so ausgelegt werden, dass sie sicher über die gesamte zu erwartende Einsatzdauer der betreffenden Tür funktionieren. Beides führt zu hohem Aufwand und damit hohen Kosten.

Die der Erfindung zu Grunde liegende Aufgabe besteht darin, die Funktionssicherheit von sicherheitsrelevanten Funktionstüren in Gebäuden, insbesondere von Notausgangs-, Panik- und Feuerschutztüren, die als von Hand aus zu öffnende Schwenktüren ausgebildet sind, kostengünstiger und verlässlicher zu machen.

Für die Lösung der Aufgabe wird vorgeschlagen, diese Türen mit einem Zählwerk auszustatten, welches Öffnungs-Schließzyklen des schwenkbaren Türflügels gegenüber der am Gebäude starr befestigten Zarge zählt, wobei die jeweiligen Zählimpulse durch die Schwenkbewegung des Türflügels gegenüber der Türzarge auslösbar sind.

Das Zählwerk zählt dabei mindestens bis zur Größenordnung jener Zahl von Öffnungs-Schließzyklen des Türflügels mit, ab welcher eine Wartung der Schwenktür geboten ist.

Indem damit erkennbar ist, wie oft eine Tür tatsächlich geöffnet wurde, kann sehr gut abgeschätzt werden, ob und wann Wartungsbedarf von Komponenten der Tür auftritt und ggf. die Wartung - auch nur von der jeweils betroffenen Teilmenge von Komponenten - sicher genau im optimal passenden Zeitraum durchgeführt werden.

Das Zählwerk ist in einem Falz der Tür angebracht. Ein "Falz" in diesem Sinne ist ein streifenförmiger schmaler Hohlraum, welcher bei geschlossenem Türflügel sowohl durch eine Fläche des beweglichen Türflügels als auch durch eine Fläche der unbeweglichen Türzarge begrenzt ist. Die Anordnung des Zählwerks in einem Falz hat den Vorteil, dass das Zählwerk bei geschlossener Tür nicht sichtbar ist, dass die Relativbewegung des Türflügels gegenüber der Zarge sehr unmittelbar für das Auslösen der Zählimpulse verwendet werden kann, und dass eine einzige Ausführung eines Zählwerkes für eine sehr große Vielfalt an Türen anwendbar ist, da manche Falze bei allen Funktionstüren fast gleich dick sind.

In einer weiteren bevorzugten Ausführungsform stammt die für den Betrieb des Zählwerks erforderliche Energie von der Relativbewegung des Türflügels gegenüber dem Falz. Durch besagte Relativbewegung werden also nicht nur Zählimpulse ausgelöst, sondern durch Abbremsen besagter Relativbewegung durch Teile des Zählwerks wird auch Energie aus besagter Relativbewegung an das Zählwerk übertragen, welche dann dem Zählwerk für dessen Funktion bereit steht. Beispielsweise kann durch besagte Relativbewegung eine Feder im Zählwerk aufgezogen werden, oder es kann ein kleiner Generator im Zählwerk angetrieben werden, welcher einen elektrischen Akkumulator oder elektrischen Kondensator im Zählwerk auflädt. Das Zählwerk braucht dann keine separate Energieversorgung; Verkabelung und/oder Batteriewechsel können damit entfallen.

In einer weiteren bevorzugten Ausführungsform ist das Zählwerk am Türflügel oder an der Zarge durch Kleben, typischerweise mittels eines doppelseitigen Klebebandes befestigt. Diese Befestigungsmethode ist sehr einfach werkzeuglos durchführbar, kostengünstig, universell anwendbar, mit keiner Gefahr der Beschädigung der Tür verbunden und für den vorgesehen Zweck ausreichend sicher und fest. Damit wird das Nachrüsten von bestehenden Türen mit einem Zählwerk so extrem einfach, dass Hoffnung besteht, dass es bei einem hohen Anteil der schon bestehenden Türen auch wirklich durchgeführt wird.

Die Erfindung wird an Hand von Zeichnungen veranschaulicht.
- Fig. 1:: zeigt in Schnittansicht von oben eine beispielhafte erfindungsgemäß ausgestattete Tür von oben in geschlossenem Zustand.
- Fig. 2:: zeigt die Tür von Fig. 1 in geöffnetem Zustand.
- Fig. 3:: ist ein vereinfachtes Schaltbild eines auf Magnetismus basierenden erfindungsgemäß verwendbaren Zählwerkes.

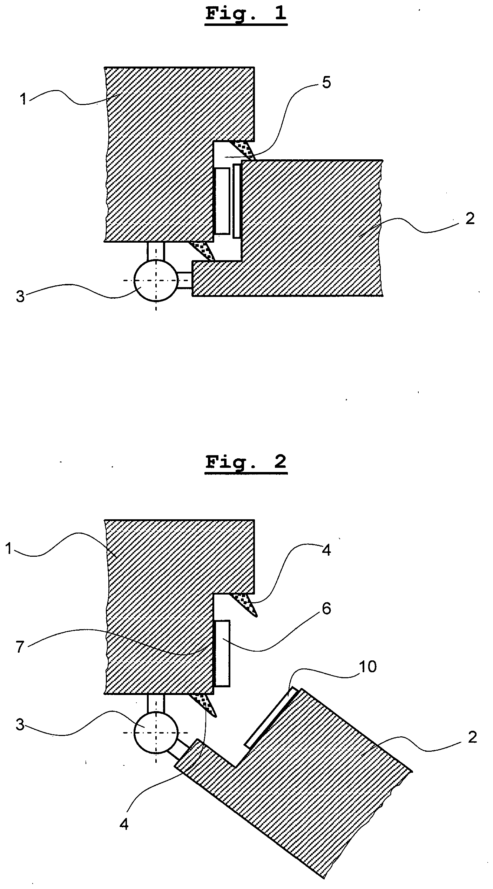

Die Tür von Fig. 1 und Fig. 2 weist einen ortsfeste Zarge 1 auf, an welcher ein Flügel 2 durch Bänder 3 (Scharniere) um eine vertikale Achse schwenkbar gelagert gehalten ist.

In geschlossenem Zustand liegen Stirnseiten von Zarge 1 und Flügel 2 einander zugewandt und grenzen zwischen sich gemeinsam mit Dichtungen 4 den einen als Falz bezeichneten, streifenförmig länglichen Hohlraum ein.

In Fig. 1 ist der bandseitige Falz 5 gezeigt, also jener Falz, welcher sich an der Scharnierseite des Flügels 2 bzw. der Zarge befindet. Zusätzlich gibt es aber auch noch einen schlossseitigen, sowie einen oberen und einen unteren Falz.

Erfindungsgemäß ist die Tür mit einem Zählwerk 6 ausgestattet. Dieses ist im skizzierten Beispiel an der dem bandseitigen Falz 5 zugewandten Fläche der Zarge 1 mittels eines doppelseitigen Klebebandes 7 befestigt.

Bestimmungsgemäß detektiert das Zählwerk 6 Öffnungs- bzw. Schließbewegung des Flügels 2 gegenüber der Zarge 1 an Hand der Relativbewegung zwischen Flügel 2 und Zarge 1 und zählt Öffnungs- und Schließbewegungen mit.

Für die konkrete Ausführung des Zählwerkes gibt es im Rahmen des fachmännischen Handelns sehr viele Möglichkeiten: Von mechanischen Ausführungen, die ausschließlich auf starren Körpern beruhenden oder das Bewegen von Fluiden miteinbeziehen, bis hin zu elektronischen Ausführungen mit den verschiedensten Arten von Schaltern oder Näherungssensoren ohmscher, elektrostatischer oder magnetischer Art. (Die diesbezügliche Internationale Patentklasse ist G06M.)

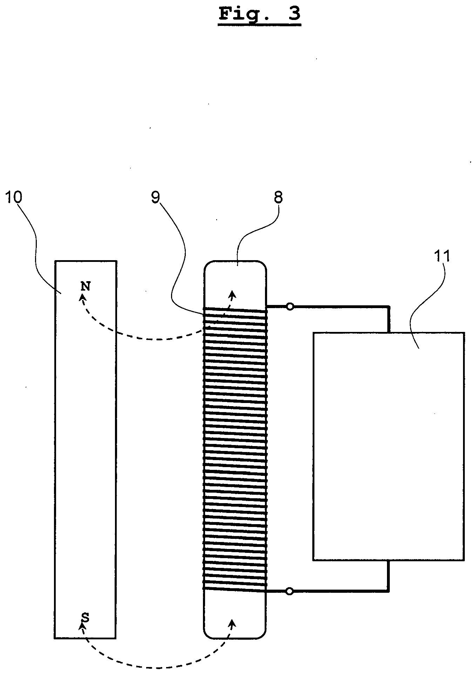

Das skizzierte Zählwerk 6 kann beispielsweise auf Magnetismus basieren. Dazu zeigt Fig. 3 ein etwas vereinfachtes Schaltbild an Hand dessen die Funktionsweise einfach verständlich wird.

Das an der Zarge 1 fixierte Zählwerk 6 umfasst eine Magnetspule, welche aus einem flachen, länglichen Weicheisenstreifen 8 und einer Leiterwicklung 9 aus einem am Mantel isolierten Draht besteht. An jenem Bereich des Flügels 2, welcher sich beim Schließen des Flügels 2 an das Zählwerk 6 annähert, ist ein Permanentmagnet 10 so befestigt, dass sich seine beiden Pole beim Schließen des Türflügels an die einander gegenüberliegenden Enden des Weicheisenstreifens 8 annähern, und in diesem daher beim Annähern einen stark anwachsenden magnetischen Fluss verursachen und beim Entfernen einen sich stark verringernden magnetischen Fluss. Der sich ändernde magnetische Fluss induziert eine Spannung in der Leiterwicklung 9, welche am Eingang der elektronischen Schaltung 11 anliegt. Die Leiterwicklung 9 stellt dadurch für die elektronische Schaltung 11 sowohl die Versorgung mit elektrischer Energie dar, als auch die Signalquelle für das elektrische Sensorsignal, dessen Schwankungen Öffnungs- bzw. Schließbewegung des Flügels 2 bedeuten und somit Zählimpulse auslösen.

Die elektronische Schaltung 11 enthält jedenfalls einen Gleichrichter, einen elektrischen Energiespeicher (Akkumulator und/oder Kondensator), ein digitales Zählwerk, welches das Anwachsen der Eingangsspannung als Impuls deutet und diese Impulse zählt, sowie Mittel für die Ausgabe des Zählerstandes. Die Ausgabe des Zählerstandes kann mit Hilfe einer optischen Anzeige erfolgen, oder auch per Funk an ein separates Empfangsgerät auf ein diesbezüglich auslösendes - vom Empfangsgerät kommendes - Signal hin, wie das beispielsweise bei RFID-Transpondern angewandt wird. Auf Grund der höheren Betriebssicherheit über Jahre ist als elektrischer Energiespeicher ein Kondensator einem Akkumulator vorzuziehen.

Elektronische Zählwerke sind mechanischen Zählwerken vorzuziehen, da elektronische Zählwerke keine bewegten Teile aufzuweisen brauchen und damit Funktionssicherheit auf Jahrzehnte leichter erreichbar ist.

Das Zählwerk 6 sollte so ausgelegt sein, dass es zumindest bis zur Größenordnung jener Anzahl von Öffnungs-Schließzyklen des Flügels 2 mit hochzählen kann, ab welcher eine Wartung der Schwenktür geboten ist.

Die Anbringung des Zählwerks 6 am bandseitigen Falz 5 ist gegenüber der Anbringung an einem anderen Falz vorteilhaft, weil dabei die für das Betätigen des Zählwerks 6 erforderlichen Kräfte sehr leicht, und für die Benutzer der Tür praktisch unbemerkbar, aufgebracht werden können.

## Patentansprüche

1. Schwenktür, welche von Hand aus zu öffnen ist und eine sicherheitsrelevante Funktionstür in einem Gebäude - insbesondere Notausgangs-, Panik- oder Feuerschutztür - ist, welche eine ortsfeste Zarge (1) und einen daran um eine vertikale Achse schwenkbar befestigten Flügel (2) aufweist, **dadurch gekennzeichnet, dass** die Schwenktür ein Zählwerk (6) aufweist, welches dazu im Stande ist, Öffnungs-Schließzyklen des Flügels (2) gegenüber der Zarge (1) bis zur Größenordnung jener Anzahl von Öffnungs-Schließzyklen mitzuzählen, ab welcher eine Wartung der Schwenktür geboten ist, wobei die jeweiligen Zählimpulse durch die Schwenkbewegung des Flügels (2) gegenüber der Zarge (1) auslösbar sind, und wobei das Zählwerk (6) in einem Falz (5) der Schwenktür angebracht ist.

2. Schwenktür nach Anspruch 1, **dadurch gekennzeichnet, dass** der Falz (5) der bandseitigen Falz der Schwenktür ist.

3. Schwenktür nach Anspruch 1 oder 2, **dadurch gekennzeichnet, dass** die Relativbewegung zwischen Flügel (2) und Zarge (1) die Energiequelle für den Energiebedarf des Zählwerks (6) darstellt.

4. Schwenktür nach einem der Ansprüche 1 bis 3, **dadurch gekennzeichnet, dass** das Zählwerk (6) durch eine Klebung an der Zarge (1) oder am Flügel (2) befestigt ist.

5. Schwenktür nach einem der Ansprüche 1 bis 4, **dadurch gekennzeichnet, dass** das Zählwerk (6) eine digitale elektronische Schaltung (11) umfasst.

6. Schwenktür nach Anspruch 5, **dadurch gekennzeichnet, dass** die Energieversorgung der Schaltung (11) darauf beruht, dass mit der Relativbewegung zwischen Flügel (2) und Zarge (1) ein Permanentmagnet (10) relativ zu einer Wicklung (9) bewegt wird und dadurch in der Wicklung (9) eine elektrische Spannung induziert wird.

7. Schwenktür nach Anspruch 6, **dadurch gekennzeichnet, dass** durch Änderung der in der Wicklung (9) induzierten Spannung Zählimpulse des Zählwerks (6) auslösbar sind.

8. Verfahren für das Erkennen von Wartungsbedarf an einer Schwenktür, welche von Hand aus zu öffnen ist und eine sicherheitsrelevante Funktionstür in einem Gebäude - insbesondere Notausgangs-, Panik- oder Feuerschutztür - ist, wobei die Schwenktür eine ortsfeste Zarge (1) und einen daran um eine vertikale Achse schwenkbar befestigten Flügel (2) aufweist,
**dadurch gekennzeichnet, dass**
Öffnungs-Schließzyklen des Flügels (2) gegenüber der Zarge (1) mittels eines an der Schwenktür im Falz (5) angebrachten Zählwerkes (6), dessen Zählimpulse durch die Schwenkbewegung des Flügels (2) gegenüber der Zarge (1) auslösbar sind, gezählt werden.

## Claims

1. Swing door, which can be opened by hand and is a safety-relevant functional door in a building - in particular emergency exit, panic or fire door - which has a stationary frame (1) and a wing (2) pivotally mounted thereto on a vertical axis, **characterised in that** the swing door has a counter (6) which is capable of counting opening-closing cycles of the wing (2) relative to the frame (1) up to the order of the number of opening-closing cycles, from which maintenance of the swing door is advisable, wherein the respective counting pulses are triggered by the pivotal movement of the wing (2) relative to the frame (1), and wherein the counter (6) is mounted in a rabbet (5) of the swing door.

2. Swing door according to claim 1, **characterised in that** the rabbet (5) is the hinge-side rabbet of the swing door.

3. Swing door according to claim 1 or 2, **characterised in that** the relative movement between the wing (2) and the frame (1) presents the power source for the power requirement of the counter (6).

4. Swing door according to one of the claims 1 to 3, **characterised in that** the counter (6) is attached by a bond to the frame (1) or to the wing (2).

5. Swing door according to one of the claims 1 to 4, **characterised in that** the counter (6) comprises a digital electronic circuit (11).

6. Swing door according to claim 5, **characterised in that** the power supply of the circuit (11) depends on the relative movement between the wing (2) and the frame (1) moving a permanent magnet (10) relative to a winding (9) and thereby inducing an electrical voltage in the winding (9).

7. Swing door according to claim 6, **characterised in that** counting pulses of the counter (6) can be triggered by changing the induced voltage in the winding (9).

8. A method for detecting maintenance needs on a swing door, which can be opened by hand and is a safety-relevant functional door in a building - in particular emergency exit, panic or fire door - whereby the swing door has a stationary frame (1) and a wing (2) pivotally mounted thereto on a vertical axis,
**characterised in that**
the opening-closing cycles of the wing (2) relative to the frame (1) are counted by a counter (6), the counting pulses of which are triggered by the pivotal movement of the wing (2) relative to the frame (1), which is mounted on the swing door in the rabbet (5).

## Revendications

1. Porte battante à ouvrir manuellement et qui est une porte fonctionnelle de sécurité dans un bâtiment, en particulier une porte de sortie de secours, une porte anti-panique ou une porte coupe-feu, laquelle présente un cadre fixe (1) et un vantail (2) fixé sur ce dernier de façon pivotante autour d'un axe vertical, **caractérisée en ce que** la porte battante présente un dispositif de comptage (6) capable de compter les cycles d'ouverture et de fermeture du vantail (2) par rapport au cadre (1) jusqu'à un certain nombre de cycles d'ouverture et de fermeture à partir duquel il est proposé une maintenance de la porte battante, les différentes impulsions de comptage pouvant être déclenchées par le mouvement de pivotement du vantail (2) par rapport au cadre (1), et le dispositif de comptage (6) étant monté dans une contrefeuillure (5) de la porte battante.

2. Porte battante selon la revendication 1, **caractérisée en ce que** la contrefeuillure (5) est la contrefeuillure côté paumelles de la porte battante.

3. Porte battante selon la revendication 1 ou 2, **caractérisée en ce que** le mouvement relatif entre le vantail (2) et le cadre (1) constitue la source d'énergie pour couvrir le besoin en énergie du dispositif de comptage (6).

4. Porte battante selon l'une des revendications 1 à 3, **caractérisée en ce que** le dispositif de comptage (6) est fixé au cadre (1) ou au vantail (2) par collage.

5. Porte battante selon l'une des revendications 1 à 4, **caractérisée en ce que** le dispositif de comptage (6) comprend un circuit électronique numérique (11).

6. Porte battante selon la revendication 5, **caractérisée en ce que** l'alimentation en énergie du circuit (11) repose sur le fait que le mouvement relatif entre le vantail (2) et le cadre (1) met en mouvement un aimant permanent (10) par rapport à un bobinage (9) et **en ce que** cela induit une tension électrique dans le bobinage (9).

7. Porte battante selon la revendication 6, **caractérisée en ce que** le fait de modifier la tension induite dans le bobinage (9) permet de déclencher des impulsions de comptage du dispositif de comptage (6).

8. Procédé pour reconnaître le besoin de maintenance sur une porte battante à ouvrir manuellement et qui est une porte fonctionnelle de sécurité dans un bâtiment, en particulier une porte de sortie de secours, une porte anti-panique ou une porte coupe-feu, la porte battante présentant un cadre fixe (1) et un vantail (2) fixé sur ce dernier de façon pivotante autour d'un axe vertical,
**caractérisé en ce que**
les cycles d'ouverture et de fermeture du vantail (2) par rapport au cadre (1) sont comptés à l'aide d'un dispositif de comptage (6) monté dans la contrefeuillure (5) de la porte battante et dont les impulsions de comptage peuvent être déclenchées par le mouvement de pivotement du vantail (2) par rapport au cadre (1).
